# EUROPÄISCHE PATENTSCHRIFT

(11) **EP 1 747 941 B1**
(45) Veröffentlichungstag und Bekanntmachung des Hinweises auf die Patenterteilung: **04.03.2009**
(21) Anmeldenummer: 06009383.8
(22) Anmeldetag: 06.05.2006
(51) Int. Cl.: B60R 19/48

(54) **Sensorhalterung zur Herstellung eines Sensors an einem Fahrzeugteil**
Sensor support for attaching a sensor to a vehicle part
Support de capteur pour fixer un capteur sur une partie de véhicule automobile

(30) Priorität: 26.07.2005 DE 102005036138
(43) Veröffentlichungstag der Anmeldung: 31.01.2007
(73) Patentinhaber: Valeo Schalter und Sensoren GmbH, 74321 Bietigheim-Bissingen (DE)
(72) Erfinder: Neft, Hubert, 71723 Grossbottwar (DE)
(74) Vertreter: Bulling, Alexander

(56) Entgegenhaltungen:
- EP-A- 1 048 524
- EP-A- 1 083 099
- EP-A- 1 785 316
- DE-A1- 19 839 598
- DE-A1- 19 939 747
- DE-A1-7102004 037 25

## Beschreibung

Die Erfindung betrifft eine Sensorhalterung zur Halterung eines Sensors an einem Fahrzeugteil, mit einem Halterteil, das einen Anlageabschnitt zur Anlage an die eine Seite des Fahrzeugteils und einen Sensoraufnahmeabschnitt zur Aufnahme des Sensors aufweist und mit einem am Halterteil befestigbaren Befestigungsteil, das einen Halteraufnahmeabschnitt für das Halterteil aufweist.

Derartige Sensorhalterungen sind beispielsweise aus der DE 199 39 747 C2 bekannt. Bei derart bekannten Sensorhalterungen weist das Befestigungsteil Federarme auf, die unter Federspannung zur Anlage an das Fahrzeugteil dienen. Der vorbekannte Stand der Technik ist insbesondere dann vorteilhaft, wenn sich an den Sensoraufnahmeabschnitt eine trichterförmige Erweiterung anschließt.

Beim vorbekannten Stand der Technik ist es ferner erforderlich, dass die freien Enden der Federarme dort am Fahrzeugteil zum Anliegen kommen, wo das Fahrzeugteil eine Gegenanlage für die freien Enden der Federarme vorsieht.

Die Sensorhalterung gemäß dem vorbekannten Stand der Technik hat zudem den Nachteil, dass aufgrund der vergleichsweisen langen ausgebildeten Federarmen vergleichsweise viel Bauraum in axialer sowie in radialer Richtung für die Federarme sowie das die Federarme tragende Befestigungsteil zur Verfügung gestellt werden muss.

Der vorliegenden Erfindung liegt die Aufgabe zugrunde, eine Sensorhalterung bereit zu stellen, die zum einen eine sichere Anordnung der Sensorhalterung am Fahrzeugteil gewährleistet und die zum anderen vergleichsweise wenig Bauraum benötigt. Insbesondere soll durch die Erfindung erreicht werden, dass eine funktionssichere Anordnung der Sensorhalterung am Fahrzeugteil selbst bei komplexen Geometrien des Fahrzeugteils möglich ist.

Diese Aufgabe wird mit einer Eingangs beschriebenen Sensorhalterung erfindungsgemäß dadurch gelöst, dass das Befestigungsteil einen Ringabschnitt zur Anlage an das Fahrzeugteil und zwischen dem Ringabschnitt und dem Halteraufnahmeabschnitt in axialer Richtung elastisch nachgiebige Verbindungsstege aufweist, wobei das Halterteil und das Befestigungsteil im Endmontagezustand durch die elastisch nachgiebigen Verbindungsstege unter einer Vorspannung am Fahrzeugteil anordenbar sind. Hierdurch wird vorteilhafter Weise erreicht, dass durch Vorsehen der elastisch nachgiebigen Verbindungsstege und des Ringabschnitts die von den Verbindungsstegen erzeugbaren Vorspannung nicht zwangsläufig dort gegen das Fahrzeugteil wirkt, wo die Verbindungsstege vorgesehen sind. Über den Ringabschnitt kann die Vorspannkraft selbst bei unebenen und/oder komplexen Geometrien des Fahrzeugsteils gegen das Fahrzeugteil wirken. Über das Vorsehen der elastisch nachgiebigen Verbindungsstege kann zudem ein Axialspielausgleich, beispielsweise aufgrund unterschiedlicher Materialdicken unterschiedlicher Fahrzeugteile, erreicht werden.

Gemäß der Erfindung kann vorgesehen sein, dass die der Ringabschnitt bildende Ebene und die sich in axialer Richtung erstreckende Längsachse des Halteraufnahmeabschnitts einen spitzen Winkel und insbesondere einen Winkel von weniger als 45° einschließen. Durch das Vorsehen des Ringabschnitts kann auch unter diesen extremen Geometrien eine vorteilhafte und dauerhafte Halterung des Sensors am Fahrzeugteil ermöglicht werden. In der Praxis hat sich herausgestellt, dass selbst ein Winkel von weniger als 20° durch die erfindungsgemäße Sensorhalterung realisiert werden kann. Dabei ist vorteilhaft, wenn der Anlageabschnitt des Halterteils wenigstens weitgehend parallel zum Ringabschnitt des Befestigungsteils verläuft. Die durch den Anlageabschnitt gebildete Ebene schließt dann zur Längsachse des Sensoraufnahmeabschnitt einen entsprechenden spitzen Winkel ein.

Gemäß der Erfindung ist ferner denkbar, dass der Ringabschnitt wenigstens in den Bereichen zwischen den Verbindungsstegen in axialer Richtung elastisch nachgiebig ausgebildet ist. Hierdurch wird erreicht, dass der Ringabschnitt sich wenigstens bedingt an die Oberfläche des Fahrzeugteils anpassen kann.

Gemäß einer Weiterbildung der Erfindung ist denkbar, dass der Ringabschnitt auf der dem Fahrzeugteil zugewandten Seite Anlagepins aufweist. Die Anlagepins können dabei durch Erhebungen gebildet sein, die in Richtung des Fahrzeugteils weisen. Die Anlagepins können ferner äquidistant zueinander angeordnet und/oder die jeweils mittig zwischen zwei benachbarten Verbindungsstegen angeordnet sein. Insbesondere dann, wenn der Ringabschnitt in axialer Richtung elastisch nachgiebig ausgebildet ist, kann ein optimales Anliegen der Anlagepins unter entsprechender Vorspannung am Fahrzeugteil erreicht werden, ohne dass hierzu zusätzlicher Bauraum bereitzustellen ist.

Durch die Kombination der elastisch nachgiebigen Verbindungsstege sowie des wenigstens abschnittsweise in axialer Richtung elastisch nachgiebigen Ringabschnitts in Verbindung mit den in axialer Richtung weisenden Anlagepins ist es möglich, die erfindungsgemäße Sensorhalterung unter einer gewissen Elastizität bzw. unter einer gewissen Vorspannung an einem Fahrzeugteil unter Inanspruchnahme von vergleichsweise wenig Bauraum, insbesondere im Hinblick auf die DE 199 39 747 C2, anzuordnen. Selbst dann, wenn die Anlagepins nicht am Fahrzeugteil zum Anliegen kommen sollen, beispielsweise aufgrund einer komplexen Geometrie des Fahrzeugteils, kommt dennoch der Ringabschnitt zur Anlage an das Fahrzeugteil.

Die Elastizität der Sensorhalterung am Fahrzeugteil bzw. die Vorspannung, mit der die Sensorhalterung am Fahrzeugteil angeordnet wird, kann dabei insbesondere über folgende Parameter eingestellt werden: Breite, Dicke und Tiefe der Verbindungsstege, Breite, Dicke und Tiefe des Ringabschnitts, Höhe der Anlagepins sowie die elastischen Eigenschaften des zu verwendenden Materials.

Gemäß einer weiteren vorteilhaften Ausgestaltung der Erfindung kann vorgesehen sein, dass der Ringabschnitt den Aufnahmeabschnitt in axialer und/oder radialer Richtung geringfügig überragt. Beispielsweise ist denkbar, dass zwischen dem Ringabschnitt und dem Aufnahmeabschnitt ein Spalt vorhanden ist, der vorteilhafter Weise gleich oder kleiner wie die Wandstärke des Aufnahmeabschnitts ist und/oder der gleich oder kleiner als die sich in radialer Richtung erstreckende Breite des Ringabschnitts ist. Hierdurch kann gewährleistet werden, dass vergleichsweise wenig Bauraum beansprucht wird. Aufgrund der elastischen Nachgiebigkeit der Verbindungsstege kann dennoch gewährleistet werden, dass eine sichere Befestigung der Sensorhalterung am Fahrzeugteil dauerhaft möglich ist.

Gemäß einer weiteren Ausgestaltung der Erfindung kann das Halterteil und oder das Befestigungsteil Rastmittel zur gegenseitigen Verbindung aufweisen. Das Vorsehen von Rastmitteln hat den Vorteil, dass beim Fügen der beiden Bauteile am Fahrzeugteil keine weiteren und/oder zusätzlichen Arbeitsschritte erforderlich sind.

Eine weitere Ausgestaltung der Erfindung kennzeichnet sich dadurch, dass der Sensoraufnahmeabschnitt und/oder der Halteraufnahmeabschnitt wenigstens abschnittsweise hülsen- oder ringartig ausgebildet sind. Dabei ist denkbar, dass der Sensoraufnahmeabschnitt wenigstens abschnittsweise in den Halteraufnahmeabschnitt zur gegenseitigen Verbindung eingeschoben werden kann.

Gemäß der Erfindung ist denkbar, dass der Kreisringabschnitt ein offener oder geschlossener Kreiselabschnitt ist. Das Vorsehen eines offenen Kreisringabschnitts kann den Vorteil haben, dass, je nach Geometrie des Fahrzeugteils, ein besseres Anliegen des Ringabschnitts am Fahrzeugteil erreicht werden kann.

Gemäß einer Weiterbildung der Erfindung ist es vorteilhaft, wenn am Befestigungsteil und/oder am Halterteil Führungsmittel vorgesehen sind, mittels denen das Verbinden der beiden Teile nur in der vorgegebenen Position möglich ist. Als Führungsmittel können insbesondere Stege in Betracht kommen, die in am anderen Bauteil vorgesehene Nuten eingreifen.

Gemäß der Erfindung ist ferner denkbar, dass der Anlageabschnitt des Sensoraufnahmeabschnitts kragenartig zur Anlage an das Fahrzeugteil ausgebildet ist.

Weitere Einzelheiten und vorteilhafte Ausgestaltungen der Erfindung sind der nachfolgenden Beschreibung zu entnehmen, in der die Erfindung anhand des in der Zeichnung dargestellten Ausführungsbeispiels näher beschrieben und erläutert ist.

Es zeigen:
- Figur 1: Die Seitenansicht einer erfindungsgemäßen Sensorhalterung,
- Figur 2: die Vorderansicht der erfindungsgemäßen Sensorhalterung nach Figur 1,
- Figur 3 bis Figur 7: verschiedene Ansichten und Schnitte des Befestigungsteils der Sensorhalterung nach Figur 1 und 2 und
- Figur 8 bis Figur 11: verschiedene Ansichten und Schnitte eines Halterteils der Sensorhalterung nach Figur 1 und 2.

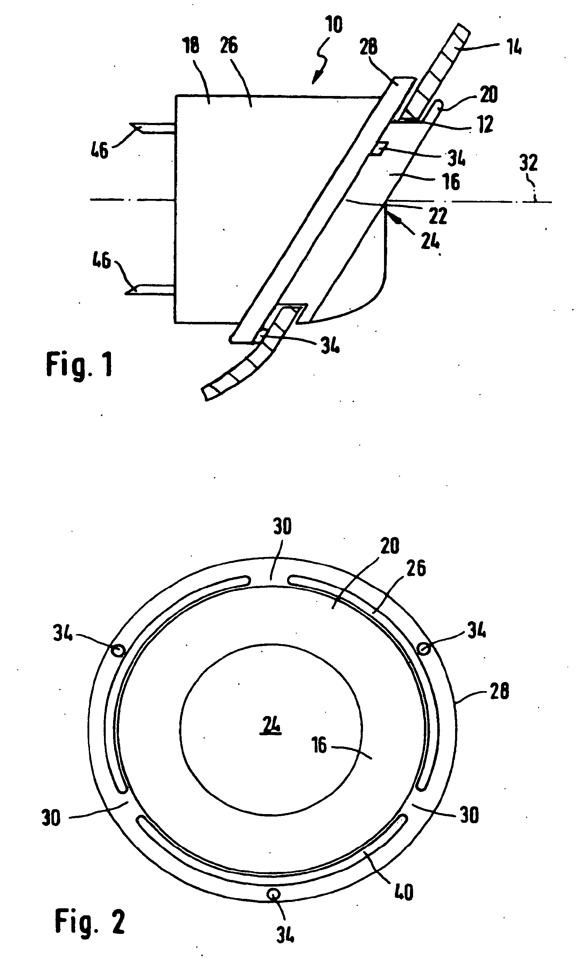

In den Figuren 1 und 2 ist eine erfindungsgemäße Sensorhalterung 10 an einem einen Durchbruch 12 aufweisenden Fahrzeugteil 14 dargestellt. Die Sensorhalterung 10 besteht dabei aus einem Halterteil 16 und einem Befestigungsteil 18. Das Halterteil 16 umfasst einen kragenartigen Anlageabschnitt 20, der an der Außenseite des Fahrzeugteils 14, das beispielsweise ein Stoßfänger eines Fahrzeugs sein kann, anliegt. Ferner umfasst das Halterteil 16 einen durch den Durchbruch 12 auf die Innenseite des Fahrzeugteils 14 ragenden Sensoraufnahmeabschnitt 22, der einen Sensorraum 24 zur Aufnahme eines des in den Figuren nicht dargestellten Sensors, insbesondere eines Ultraschallsensors, bildet.

Das Befestigungsteil 18 weist einen Halteraufnahmeabschnitt 26 auf, an dem das Halterteil 16 im montierten Zustand befestigt ist. Ferner weist das Befestigungsteil 18 einen an der Innenseite des Fahrzeugsteils 14 anliegenden Ringabschnitt 28 auf.

Dabei ist das Halterteil 16 sowie das Befestigungsteil 18 vorteilhafter Weise aus Kunststoff hergestellt.

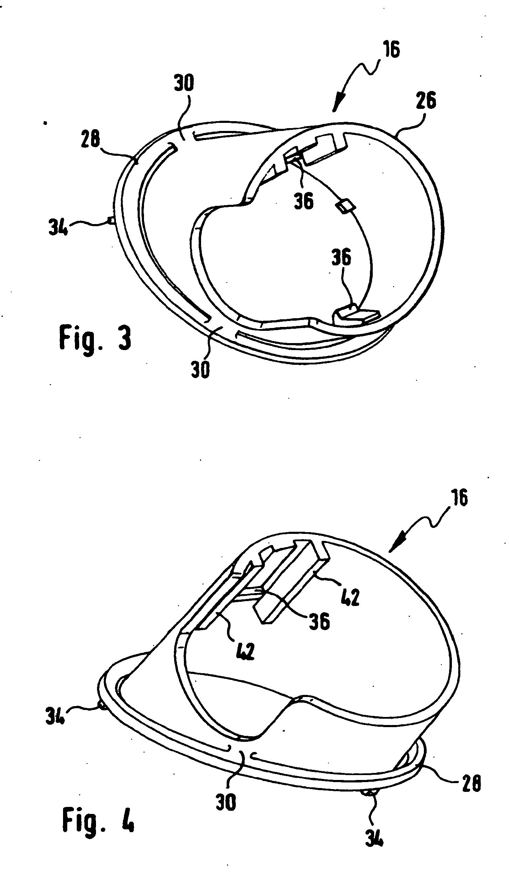

Wie aus Figur 2 und den Figuren 3 bis 7 zu erkennen ist, sind zwischen dem als geschlossenem Kreisring ausgebildeten Ringabschnitt 28 und dem Halteraufnahmeabschnitt 26 insgesamt drei Verbindungsstege 30 vorgesehen, die in axialer Richtung, d.h. in Richtung der Mittellängsachse 32, elastisch nachgiebig ausgebildet sind.

Im in der Figur 1 dargestellten Endmontagezustand wird durch die elastisch nachgiebigen Verbindungsstege 30 eine in axialer Richtung wirkende Vorspannkraft erzeugt, aufgrund derer das Fahrzeugteil 14 zwischen dem Anlageabschnitt 20 und dem Ringabschnitt 28 geklemmt gehaltert wird. Zudem kann ein Axialspielausgleich im Hinblick auf die Fahrzeugteilstärke erreicht werden.

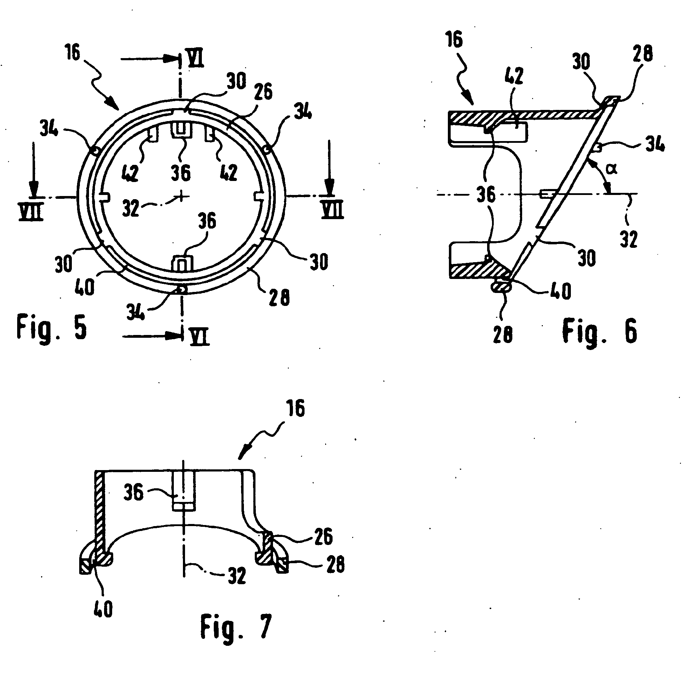

Wie insbesondere aus der Figur 1 und der Figur 6 deutlich wird, schließen die vom Ringabschnitt 28 gebildete Ebene und die Längsachse 32 einen spitzen Winkel α im Bereich von ca. 40° ein. Entsprechend schließt die vom Anlageabschnitt 20 des Halterteils 16 gebildete Ebene mit der Achse 32 einen Winkel α ein.

Der Ringabschnitt 28 weist auf seiner dem Fahrzeugteil 14 zugewandten Seite insgesamt drei äquidistant zueinander angeordnete Anlagepins 34 auf, die zur definierten Anlage an das Fahrzeugteil 14 dienen. Zwischen zwei Verbindungsstegen 30 ist jeweils mittig ein Anlagepin 34 vorgesehen.

Der Ringabschnitt 28 kann dabei in axialer Richtung wenigstens bedingt elastisch nachgiebig ausgebildet sein, wodurch ein besseres Anliegen des Ringabschnitts 28 bzw. der Anlagepins 34 am Fahrzeugteil 14 erreicht werden kann.

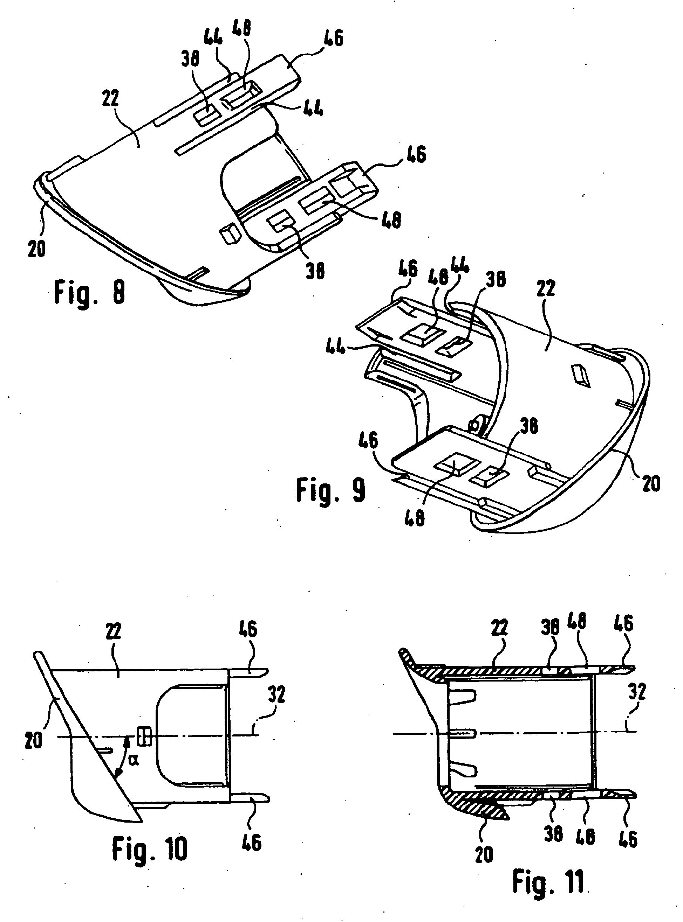

Zur Befestigung des Befestigungsteils 18 am Halterteil 16 weist der hülsenartig ausgebildete Halteraufnahmeabschnitt 26 aus seiner radial innenliegenden Seite Rastelemente in Form von nach radial innen ragenden Rastnasen 36 auf. Die Rastnasen 36 wirken im montieren Zustand mit in den Figuren 8 bis 11 gezeigten Rastmitteln in Form von Rastösen 38 zusammen.

Wie aus der Figur 2 und insbesondere aus der Figur 5 deutlich wird, überragt der Ringabschnitt 28 den Halteraufnahmeabschnitt 26 in radialer Richtung derart, dass zwischen dem hülsenartig ausgebildeten Halteraufnahmeabschnitt 26 und dem Ringabschnitt 28 ein Spalt 40 vorhanden ist. Die Breite des Spalts 40 in radialer Richtung ist dabei geringer als die Breite des Ringabschnitts 28 in radialer Richtung und des Halteraufnahmeabschnitts 26 in radialer Richtung. Hierdurch ergibt sich eine vergleichsweise kompakte Bauweise des Halterteils 16.

Aus den Figuren 6 und 7 wird zudem deutlich, dass der Ringabschnitt 28 den Halteraufnahmeabschnitt 26 im nicht montierten Zustand auch in axialer Richtung überragt.

Der Halteraufnahmeabschnitt 26 sieht ferner auf seiner radial nach innen gewandten Seite in axialer Richtung verlaufende Führungsstege 42 vor, die bei der Montage des Halterteils 16 mit dem Befestigungsteil 18 von in den Figuren 8 und 9 gezeigten Führungsnuten 44 geführt werden.

Wie aus den Figuren 8 bis 11 deutlich wird, sind am Sensoraufnahmeabschnitt 22 des Halterteils in axialer Richtung angeformte Rastzungen 46 vorhanden. Die Rastzungen 46 weisen dabei die Rastösen 38 für die Rastnasen 36 sowie weitere Rastösen 48 für am nicht dargestellten Sensor vorhandene Rastnasen auf.

Die in den Figuren dargestellte Sensorhalterung 10 hat den Vorteil, dass über die Auswahl der Breite und Länge der Verbindungsstege 30, der sich in radialer Richtung erstreckenden Breite des Ringabschnitts 28, der sich in axialer Richtung erstreckenden Dicke des Ringabschnitts 28 und/oder der in axialer Richtung gerichteten Länge der Anlagepins 34 die Vorspannkraft, mit der der Sensorhalter am Fahrzeugteil 14 gehalten wird, einstellbar ist.

## Patentansprüche

1. Sensorhalterung (10) zur Halterung eines Sensors an einem Fahrzeugteil (14), mit einem Halterteil (16), das einen Anlageabschnitt (20) zur Anlage an die eine Seite des Fahrzeugteils (14) und einen Sensoraufnahmeabschnitt (22) zur Aufnahme des Sensors aufweist und mit einem am Halterteil (16) befestigbaren Befestigungsteil (18), das einen Halteraufnahmeabschnitt (26) für das Halterteil (16) aufweist, **dadurch gekennzeichnet, dass** das Befestigungsteil (18) einen Ringabschnitt (28) zur Anlage an die andere Seite des Fahrzeugteils (14) und zwischen dem Ringabschnitt (28) und dem Halteraufnahmeabschnitt (26) in axialer Richtung elastische nachgiebige Verbindungsstege (30) ausweist, wobei das Halterteil (16) und das Befestigungsteil (18) im Endmontagezustand durch die elastisch nachgiebigen Verbindungsstege (30) unter einer Vorspannung am Fahrzeugteil (14) anordenbar sind.

2. Sensorhalterung (10) nach Anspruch 1, **dadurch gekennzeichnet, dass** die der Ringabschnitt (28) bildenden Ebene und die sich in axialer Richtung erstreckende Längsachse (32) des Halteraufnahmeabschnitt (26) einen spitzen Winkel (α) und insbesondere einen Winkel von weniger als 45° einschließen.

3. Sensorhalterung (10) nach Anspruch 1 oder 2, **dadurch gekennzeichnet, dass** der Ringabschnitt (28) wenigstens in den Bereichen zwischen den Verbindungsstegen (30) in axialer Richtung elastisch nachgiebig ausgebildet ist.

4. Sensorhalterung (10) nach einem der vorhergehenden Ansprüche, **dadurch gekennzeichnet, dass** der Ringabschnitt (28) auf der dem Fahrzeugteil (14) zugewandten Seite in axialer Richtung erhabene Anlagepins (34) aufweist.

5. Sensorhalterung (10) nach Anspruch 4, **dadurch gekennzeichnet, dass** die Anlagepins (34) jeweils mittig zwischen zwei benachbarten Verbindungsstegen (30) angeordnet sind.

6. Sensorhalterung (10) nach einem der vorhergehenden Ansprüche, **dadurch gekennzeichnet, dass** der Ringabschnitt (28) den Halteraufnahmeabschnitt (26) in axialer und/oder radialer Richtung geringfügig überragt.

7. Sensorhalterung (10) nach einem der vorhergehenden Ansprüche, **dadurch gekennzeichnet, dass** das Halterteil (16) und/oder das Befestigungsteil (18) Rastmittel (36, 38) zur gegenseitigen Verbindung aufweisen.

8. Sensorhalterung (10) nach einem der vorhergehenden Ansprüche, **dadurch gekennzeichnet, dass** der Sensoraufnahmeabschnitt (22) und/oder der Halteraufnahmeabschnitt (26) wenigstens abschnittsweise hülsenartig oder ringartig ausgebildet sind.

9. Sensorhalterung (10) nach einem der vorhergehenden Ansprüche, **dadurch gekennzeichnet, dass** der Halteraufnahmeabschnitt (26) auf der dem Ringabschnitt zugewandten Seite eine umlaufende Kante aufweist, an der die Verbindungsstege (30) angeordnet sind.

10. Sensorhalterung (10) nach einem der vorhergehenden ansprüche, **dadurch gekennzeichnet, dass** der Ringabschnitt (28) ein offener oder geschlossener Kreisringabschnitt ist.

11. Sensorhalterung (10) nach einem der vorhergehenden Ansprüche, **dadurch gekennzeichnet, dass** am Befestigungsteil (18) und/oder am Halterteil (16) Führungsmittel (42, 44) vorgesehen sind, mittels denen das Verbinden der beiden Teile nur in einer vorgegebenen Position möglich ist.

12. Sensorhalterung (10) nach einem der vorhergehenden Ansprüche, **dadurch gekennzeichnet, dass** der Anlageabschnitt (20) den Sensoraufnahmeabschnitt (22) wenigstens abschnittsweise kragenartig überragt.

## Claims

1. A sensor support (10) for supporting a sensor on a vehicle part (14), having a support element (16), which has a contact section (20) for contact with the one side of the vehicle part (14), and a sensor receptacle section (22) for receiving the sensor, and having a fastening element (18), which can be fastened to the support element (16) and has a support element receptacle section (26) for the support element (16), **characterized in that** the fastening element (18) has an annular section (28) for contact with the other side of the vehicle part (14), and connecting strips (30) between the annular section (28) and the support element receptacle section (26), which are elastically resilient in the axial direction, wherein, in the final assembled state, the support element (16) and the fastening element (18) can be arranged with prestress on the vehicle part (14) by means of the elastically resilient connecting strips (30).

2. The sensor support (10) in accordance with claim 1, **characterized in that** the plane constituting the annular section (28) and the longitudinal axis (32), extending in the axial direction, of the support element receptacle section (26) enclose an acute angle (α), in particular an angle of less than 45°.

3. The sensor support (10) in accordance with claim 1 or 2, **characterized in that** the annular section (28) is embodied to be elastically resilient in the axial direction, at least in the areas between the connecting strips (30).

4. The sensor support (10) in accordance with one of the preceding claims, **characterized in that**, on the side facing the vehicle part (14), the annular section (28) has contact pins (34), which are raised in the axial direction.

5. The sensor support (10) in accordance with claim 4, **characterized in that** the contact pins (34) are respectively arranged centered between two adjoining connecting strips (30).

6. The sensor support (10) in accordance with one of the preceding claims, **characterized in that** the annular section (28) slightly protrudes past the support element receptacle section (26) in the axial and/or radial direction.

7. The sensor support (10) in accordance with one of the preceding claims, **characterized in that** the support element (16) and/or the fastening element (18) have snap-in means (36, 38) for their mutual connection.

8. The sensor support (10) in accordance with one of the preceding claims, **characterized in that** the sensor receptacle section (22) and/or the support element receptacle section (26) are embodied, at least in portions, in a sleeve-like or annular- like manner.

9. The sensor support (10) in accordance with one of the preceding claims, **characterized in that** on the side facing the annular section, the support element receptacle section (26) has a circumferential edge, on which the connecting strips (30) are arranged.

10. The sensor support (10) in accordance with one of the preceding claims, **characterized in that** the annular section (28) is an open or a closed circular annular section.

11. The sensor support (10) in accordance with one of the preceding claims, **characterized in that** guide means (42, 44) are provided at the fastening element (18) and/or the support element (16), by means of which the connection between the two parts is possible only in a predetermined position.

12. The sensor support (10) in accordance with with one of the preceding claims, **characterized in that** the contact section (20) protrudes, at least in portions, past the sensor receptacle section (22) in a collar-like manner.

## Revendications

1. Dispositif de maintien de capteur (10) pour maintenir un capteur sur une partie de véhicule (14), comprenant une pièce de maintien (16), qui présente une portion d'appui (20) pour s'appuyer sur un côté de la partie de véhicule (14) et une portion de réception de capteur (22) pour recevoir le capteur, et une pièce de fixation (18) pouvant être fixée à la pièce de maintien (16) et présentant une portion de réception de maintien (26) pour la pièce de maintien (16), **caractérisé en ce que** la pièce de fixation (18) présente une portion annulaire (28) pour s'appuyer sur l'autre côté de la partie de véhicule (14), et entre la portion annulaire (28) et la portion de réception de maintien (26), des entretoises de raccordement (30) flexibles de façon élastique dans la direction axiale, la pièce de maintien (16) et la pièce de fixation (18) pouvant être disposées à l'état de montage final par les entretoises de raccordement (30) flexibles de façon élastique sous une précontrainte sur la partie de véhicule (14).

2. Dispositif de maintien de capteur (10) selon la revendication 1, **caractérisé en ce que** le plan formant la portion annulaire (28) et l'axe longitudinal (32) s'étendant dans la direction axiale de la portion de réception de maintien (26) enferment un angle aigu (α) et en particulier un angle de moins de 45°.

3. Dispositif de maintien de capteur (10) selon la revendication 1 ou 2, **caractérisé en ce que** la portion annulaire (28) est réalisée au moins dans les zones entre les entretoises de raccordement (30) en étant flexible de façon élastique dans la direction axiale.

4. Dispositif de maintien de capteur (10) selon l'une quelconque des revendications précédentes, **caractérisé en ce que** la portion annulaire (28) présente sur le côté tourné vers la partie de véhicule (14) des goupilles d'appui (34) en relief dans la direction axiale.

5. Dispositif de maintien de capteur (10) selon la revendication 4, **caractérisé en ce que** les goupilles d'appui (34) sont disposées respectivement au milieu entre deux entretoises de raccordement voisines (30).

6. Dispositif de maintien de capteur (10) selon l'une quelconque des revendications précédentes, **caractérisé en ce que** la portion annulaire (28) dépasse légèrement de la portion de réception de maintien (26) dans la direction axiale et/ou radiale.

7. Dispositif de maintien de capteur (10) selon l'une quelconque des revendications précédentes, **caractérisé en ce que** la pièce de maintien (16) et/ou la pièce de fixation (18) présentent des moyens d'arrêt (36, 38) pour un raccordement mutuel.

8. Dispositif de maintien de capteur (10) selon l'une quelconque des revendications précédentes, **caractérisé en ce que** la portion de réception de capteur (22) et/ou la portion de réception de maintien (26) sont réalisées au moins par endroits à la manière de douilles ou de bagues.

9. Dispositif de maintien de capteur (10) selon l'une quelconque des revendications précédentes, **caractérisé en ce que** la portion de réception de maintien (26) présente sur le côté tourné vers la portion annulaire une arête périphérique sur laquelle sont disposées les entretoises de raccordement (30).

10. Dispositif de maintien de capteur (10) selon l'une quelconque des revendications précédentes, **caractérisé en ce que** la portion annulaire (28) est une portion d'anneau de cercle ouverte ou fermée.

11. Dispositif de maintien de capteur (10) selon l'une quelconque des revendications précédentes, **caractérisé en ce que** sur la pièce de fixation (18) et/ou sur la pièce de maintien (16), des moyens de guidage (42, 44) sont prévus, au moyen desquels il est possible de raccorder les deux pièces dans une position prédéfinie seulement.

12. Dispositif de maintien de capteur (10) selon l'une quelconque des revendications précédentes, **caractérisé en ce que** la portion d'appui (20) dépasse de la portion de réception de capteur (22) au moins par endroits à la manière d'un col.
